# EUROPÄISCHE PATENTSCHRIFT

(11) **EP 1 957 269 B1**
(45) Veröffentlichungstag und Bekanntmachung des Hinweises auf die Patenterteilung: **04.12.2013**
(21) Anmeldenummer: 06792128.8
(22) Anmeldetag: 19.09.2006
(51) Int. Cl.: B32B 27/30, B32B 27/40, B29C 41/32, B32B 37/24

(54) **VERFAHREN ZUR HERSTELLUNG MEHRFARBIGER FOLIEN**
METHOD FOR PRODUCING MULTI-COLOURED FILMS
PROCEDE DE PRODUCTION DE FILMS MULTICOLORES

(30) Priorität: 25.11.2005 DE 102005056222
(43) Veröffentlichungstag der Anmeldung: 20.08.2008
(73) Patentinhaber: Benecke-Kaliko Aktiengesellschaft, D-30419 Hannover (DE)
(72) Erfinder: WEBERSINKE, Dieter, 31582 Nienburg (DE); BÜSCHER, Joachim, 31228 Peine (DE); KIRCHBERG, Gerd, 30900 Wedemark (DE); KLAMMER, Siegfried, 30900 Wedemark (DE); WOLFF, Roland, 30926 Seelze (DE)
(74) Vertreter: Finger, Karsten
(86) Internationale Anmeldenummer: PCT/EP2006/009073
(87) Internationale Veröffentlichungsnummer: WO 2007/059818

(56) Entgegenhaltungen:
- DE-A1- 4 121 599
- DE-A1- 19 936 308
- US-A1- 2003 175 467

## Beschreibung

Die Erfindung betrifft ein Verfahren zur Herstellung mehrfarbiger Folien im Umkehrstreichverfahren, insbesondere von PVC-Schaumfolien für dekorative Zwecke zum Aufbringen auf räumliche Körper, z. B auf Armaturenbrettern von Kraftfahrzeugen, bei dem zunächst eine Trägerstruktur mit einem flüssigen Kunststoff beschichtet und danach auf die Kunststoffschicht eine zweite Kunststoffschicht aufgetragen wird, vorzugsweise in Form einer Schaumfolie, und ggf. weitere Lack- oder Kleberschichten auf die zweite Kunststoffschicht aufgebracht werden, wobei nach ausreichender Trocknung des Schichtverbundes die Trägerstruktur abgezogen und die darunter liegende Oberfläche des Schichtverbundes lackiert und mit einer Oberflächenstruktur versehen, vorzugsweise geprägt und danach ggf. geschnitten wird. Ebenfalls wird eine Vorrichtung zur Herstellung der erfindungsgemäßen Folie offenbart.

Die DE 195 30 757 A1 offenbart ein Verfahren und eine Vorrichtung zur Herstellung von zwei- oder mehrfarbigen Folien z. b. für Armaturenbretter, bei dem eine aus einem Kunststoff bestehende Trägerfolie mit Hilfe einer besonders geformten Extrusionsdüse mit weiteren Kunststoffschichten oder -folien unterschiedlicher Farbgebung belegt wird. Hierzu weist die Extruderdüse einen Spalt bzw. Austrittsquerschnitt für das Extrudat der Trägefolie aus, über dem zwei weitere Austrittsquerschnitte für die farbigen Deckschichten angeordnet sind, deren Ausflußwege oder -kanäle durch einen keilförmigen oder dreiecksförmigen Vorsprung bis kurz vor der Auflage des farbigen Obermateriales/Deckschichtmateriales auf der Trägerfolie getrennt sind. Hierdurch fließt das Extrudat für die Deckschichten erst kurz vor dem Auftreffen auf der Trägerfolie zusammen, wodurch sich zwar eine leidlich gute Nahtführung zwischen den unterschiedlichen Farbereichen ergibt, letztlich aber ein leichtes Mischen der Farben im Übergangsbereich nicht vermieden werden kann. Demzufolge ist dieses Verfahren eher dort anwendbar, wo lediglich unterschiedliche Farbtiefen, beispielsweise also unterschiedliche Grautöne aneinander stoßen.

Die DE 101 21 518 A1 offenbart ein Verfahren zur Herstellung einer zwei- oder mehrfarbigen Schaumfolie, bei der eine tragende Unterschicht aus Schaumfolie mit einer Deckschicht belegt wird, die ihrerseits wieder aus mindestens zwei Schichten besteht, nämlich einer Trägerschicht und mindestens einer weiteren Schicht. Die Trägerschicht in einer ersten Farbe weist hierbei eingewalzte oder anderweitig profilierte Vertiefungen auf, in welche die weitere Schicht einer anderen Farbe so eingelegt wird, dass eine bündige Außenoberfläche zwischen Trägerschicht und weiterer Schicht entsteht. Das Aufbringen der Schichten erfolgt dabei durch einen Extrusionsprozess. Es ergeben sich recht gute Farbübergänge, ohne das jedoch Mischungsprozesse oder ungerade Nahtverläufe ganz vermieden werden könnten.

Die DE 19936308 A1 offenbart ein Verfahren zur Herstellung von zwei- oder mehrfarbigen Folien durch einen Extrusionsprozeß.

Auch beim Direktstreichverfahren, also beispielsweise bei der Herstellung von Kunstledern, bei denen eine Trägerschicht z. B. aus Textilfasern im Produkt eingebunden ist, kennt man die Herstellung von mehrfarbigen Folien. Auch hier ergeben sich recht gute Farbübergänge und es besteht der Vorteil, dass die spätere Oberfläche "direkt" nach der Herstellung in Erscheinung tritt und evtl. Abweichungen einem hinreichend guten Nahtverlauf sofort sichtbar werden. Allerdings gibt es auch beim Direktstreichverfahren die Problematik, dass Mischungsprozesse im Nahtbereich nicht ganz vermieden werden können.

Für die Erfindung bestand also die Aufgabe, ein Verfahren für die Herstellung mehrfarbiger Folien bereitzustellen, bei dem eine scharfe, deutlich konturierte und völlig saubere Farbtrennung einzelner Farbschichten ohne Mischzonen erreichbar ist, welches einfach und kostengünstig durchzuführen ist und welches mit hoher Qualität für nebeneinander liegende Farbschichten stark unterschiedlicher Farben geeignet ist.

Gelöst wir diese Aufgabe durch die Merkmale des Hauptanspruchs. Dabei wird die erste Kunststoffschicht der Trägerstruktur in mehreren gleichzeitig nebeneinander aufgetragenen flüssigen Kunststoff-Chargen unterschiedlicher Farbgebung aufgebracht, wobei die unterschiedlichen Kunststoff-Chargen bis kurz vor dem Anhaften auf der Trägerstruktur getrennt geführt und in ihrem Massenstrom gesteuert werden. Durch eine solche Verfahrensweise entsteht nach dem Abziehen der Trägerstruktur ein so genannter "trägerloser Schaum" mit einer exakt und gerade verlaufenden Trennnaht zwischen den beiden Farbschichten, ohne Auswischungen oder Farbverläufe und ohne ein Mäandrieren der Nahtbereiche. Solche "trägerlosen Schäume" oder "trägerlosen Schaumfolien", d.h. Kunststofffolien ohne weitere separate Verstärkungs- oder Trägerschichten, können relativ hohe Umformungsgrade bei der nachfolgenden Verformung ertragen, also etwa beim Aufbringen auf Armaturenbrett- oder Türverkleidungsträgern für Kraftfahrzeuge. Sie sind damit den Kunstledern, bei denen eine Trägerschicht z. B. aus Textilfasern im Produkt eingebunden ist und dort eben auch bei der Weiterverarbeitung verbleibt, in der Verformbarkeit überlegen.

Eine vorteilhafte Ausbildung besteht darin, dass die Trägerstruktur über Walze und Rakel bzw. Streichmesser mit einem flüssigen Kunststoff beschichtet wird und dass der Massenstrom über den Kanalquerschnitt einer Zufuhreinrichtung gesteuert wird. Mit Hilfe einer solchen Ausbildung lässt sich die Schichtdicke der nebeneinander liegenden Farbschichten sehr genau einstellen, was wiederum wichtig für den sauberen Nahtverlauf ist.

Eine weitere vorteilhafte Ausbildung besteht darin, dass ein dehäsiv beschichtetes Papier als Trägerstruktur eingesetzt wird. Hierdurch wird nicht nur das nachfolgende Abziehen der Trägerstruktur / des Papiers erleichtert, es wird auch verhindert, dass während des Aufbringens der farblich unterschiedlichen Kunststoffchargen einige Teilmengen des Kunststoffs durch die vorhandene Oberflächenrauhigkeit stärker an der Trägerstruktur haften als andere Teilbereiche. Dadurch könnten nämlich die Strömungsverhältnisse so gestört werden, dass unschöne Markierungen auf der fertigen Folie entstehen.

Eine weitere vorteilhafte Ausbildung besteht darin, dass die erste Kunststoffschicht vor der Prägung der Oberflächenstruktur über eine Heizanlage erwärmt wird, wobei die Erwärmung bzw. die Heizanlage abhängig von der Absorptionsfähigkeit der nebeneinander liegenden einzelnen Farbschichten gesteuert wird. Hierdurch vermeidet man ein zu starkes oder zu schwaches Erwärmen der Folie und erreicht eine genaue Anpassung der Temperaturen der einzelnen unterschiedlich farblichen Folienteile auf die beste Prägetemperatur. In besonders vorteilhafter, weil einfacher und im Aufwand für die Steuerung begrenzter Weise lässt sich dies dadurch erreichen, dass die Erwärmung mindestens teilweise über Infrarot-Strahler erfolgt, wobei die Steuerung der Erwärmung über eine Segmentierung bzw. die Anordnung der Infrarot-Strahler erfolgt.

Eine weitere vorteilhafte Ausbildung besteht darin, dass das Schneiden der Folie über Sensoren gesteuert wird, welche mindestens eine der Farbtrennlinien erfassen. Damit erfolgt das Schneiden abhängig von z. b. in mittleren Bereichen einer mehrfach-farbig hergestellten Folie liegenden Farbtrennlinien, so dass der für die Weiterverarbeitung wichtige Abstand von Farbtrennung zum Folienrand bestmöglich eingehalten wird.

In weiteren vorteilhaften Ausbildungen besteht das Material für die erste und die zweite Kunststoffschicht aus einem mit einem Weichmacher versetzten Polyvinylchlorid oder aus einem Polyurethankunststoff. Beide Kunststoffarten befinden sich bei Raumtemperatur in einem gut zu verarbeitenden flüssig-pastösen Zustand, so dass auf zusätzliche Heizungen zur Plastifizierung verzichtet werden kann.

Eine weitere und für die Herstellung von Kunstleder vorteilhafte Ausbildung des erfindungsgemäßen Verfahrens, also zur Herstellung von Kunststofffolien, in denen eine Trägerschicht z. B. aus Textilfasern im Produkt eingebunden ist, besteht darin, dass auf die zweite Kunststoffschicht weitere Kunststoff-, Lack- oder Kleberschichen aufgebracht werden, die mindestens teilweise mit Festigkeitsträgern, vorzugsweise mit textilen Strukturen verstärkt werden. Diese Schichten aus Festigkeitsträgern oder textilen Strukturen können als Gewirke, Gewebe, oder auch als Vlies ausgebildet sein und z. B. in die zusätzlich aufgebrachten Kunststoff-, Lack- oder Kleberschichen eingelegt oder eingewalzt werden.

Bei einsprechender Ausbildung lassen sich damit zweifarbige Kunstlederfolien herstellen, die einen sehr sauberen Nahtbereich aufweisen und Dekorfunktionen an Trägerbauteilen übernehmen können, die eine nicht allzu hohe Umformung der Folie erfordern, also beispielsweise an Möbeloberflächen, Taschen und Koffern, oder an Dach-Innenverkleidungen für Fahrzeuge (Dachhimmel).

In besondere Weise zur Herstellung solcher mehrfarbiger Folien im Umkehrstreichverfahren ist eine Vorrichtung geeignet, die mindestens eine Streichwalze aufweist, über die die Trägerstruktur geführt wird, und die oberhalb der Streichwalze einen zu letzterer geöffneten und über die Breite der Streichwalze ein oder mehrfach geteilten Streich- oder Vorgabekasten für die Zufuhr des flüssigen Kunststoffmateriales aufweist, wobei die zur Streichwalze gelegene Öffnung des Streichkastens an die Rundung der Walzenoberfläche angepasst ist, und wobei die ablaufseitige Wand des Streichkastens als bis in den Zenitbereich der Streichwalze herab geführtes Streichrakel oder Streichmesser ausgebildet ist, wobei zur Steuerung des Massenstroms mindestens der Spalt zwischen Trägerstruktur und Streichmesser einstellbar ist. Im Gegensatz zu den üblichen - einfarbigen - Umkehrstreichverfahren ohne Streichkasten, bei dem sich vor einem Rakel oder Streichmesser eine rotierende Materialwalze, die so genannte "Streichpuppe" ausbildet, die sich abhängig von der auf die Trägerstruktur (Papier) aufgegebenen Kunststoffmenge verändert und wandert, besteht bei der erfindungsgemäßen Vorrichtung ein definiertes Mengen- und Ablaufverhältnis zwischen Volumen des Streichkastens und dem Spalt (Ablaufspalt) des Streichmessers, wodurch hohe Gleichmäßigkeit der Schicht und eine konstante Einstellung der Schichtdicken erreicht wird.

Dabei erfolgt die Teilung des über die Breite der Streichwalze ein oder mehrfach geteilten Streich- oder Vorgabekastens mit Hilfe einsetzbarer Trennspachtel erfolgt, welche an ihrer Unterseite an die Rundung der Walzenoberfläche angepasst sind. Dadurch können die für eine gerade Farbtrennlinie wichtigen "Trennwände" zwischen den Kunststoff-Chargen je nach Verschleiß ausgewechselt oder in ihrem Abstand zur Streichwalze nachgestellt werden. So kann die gesamte Anlage stabil konstruiert und permanent mit wenig Wartungsaufwand betrieben werden.

Die Trennspachtel sind zudem mindestens in ihrem unteren und der Oberfläche der Streichwalze benachbarten Teil keilförmig mit einer in Bezug auf die Fertigungsrichtung ablaufseitigen Schmalseite ausgebildet. Durch eine solche Ausführung wird das "Zusammenlaufen" der Kunststoffschichten unterschiedlicher Farbgebung verbessert und es entsteht eine saubere Farbtrennlinie

Eine weitere vorteilhafte Ausbildung der Vorrichtung besteht darin, dass die einsetzbaren Trennspachtel im Wesentlichen über die Breite der Streichwalze verstellbar sind. Hierdurch lassen sich auf besonders einfache Weise unterschiedlich breite und verschiedenfarbige erste Kunststoffschichten auf die Trägerstruktur aufbringen, ohne dass der gesamte Vorgabekasten geändert werden muss.

Eine weitere vorteilhafte Ausbildung der Vorrichtung besteht darin, dass die Trennspachtel mindestens in ihrem ablaufseitig hinteren und der Oberfläche des Streichrakels oder Streichmessers benachbarten Teil keilförmig mit einer zur Oberfläche der Streichwalze benachbarten Schmalseite ausgebildet sind. Auch diese Ausführung ist wichtig für eine saubere Farbtrennlinie. Im Zusammenspiel mit der so entstehenden und aus der Form der Spachtelunterseite und der Spachtelablaufseite gebildeten "Doppel-V-Kontur" des Spachtels lässt sich unter Berücksichtigung der Streichspalthöhe ein exakter Farbverlauf einstellen. Die Abmessungen der Doppel-V-Kontur werden dabei auf die Abmessungen / die Geometrie des Fußbereiches des Streichmessers ausgelegt und beeinflussen so die Strömungsverhältnisse im Streichspalt.

Eine weitere vorteilhafte Ausbildung der Vorrichtung besteht darin, dass die Trennspachtel mindestens an ihrer in Bezug auf die Fertigungsrichtung ablaufseitigen Kante mindestens teilweise mit Dichtungen oder dichtenden Profilen versehen sind. Hierdurch vermeidet man - abhängig von der Viskosität der einzelnen Kunststoffchargen - sicher ein Vermischen der Farben oberhalb des Fußpunktes des Spachtels.

Eine weitere vorteilhafte Ausbildung der Vorrichtung besteht darin, dass mindestens die Seitenflächen und die Unterseite des Spachtels dehäsive Oberflächen aufweisen. Korrespondierend zur dehäsiven Oberfläche der Trägerstruktur wird hier ebenfalls verhindert, dass während des Aufbringens der farblich unterschiedlichen Kunststoffchargen einige Teilmengen des Kunststoffs durch die vorhandene Oberflächenrauhigkeit in den Grenzschichten stärker an Spachtelbereichen haften. Auch dadurch könnten nämlich die Strömungsverhältnisse so gestört werden, dass unschöne Markierungen auf der fertigen Folie entstehen.

Ein gleiches Ziel verfolgt eine weitere vorteilhafte Ausbildung der Vorrichtung. Sie besteht darin, dass die Spachtel in an den Wänden des Streichkastens angeordneten Halterungen gelagert sind, insbesondere angeordnet an der rückwärtigen Wand des Streichkastens, wobei die Halterungen in ihrer Oberflächenstruktur und Geometrie so ausgebildet sind, das in den angrenzenden Strömungsschichten des flüssig-pastösen Kunststoffmaterials keine sprunghafte Änderung des Strömungswiderstandes entsteht. Im Wesentlichen werden hierzu die Halterungen in geeigneter Weise abgerundet und den Hauptströmungsrichtungen in den anliegenden Grenzschichten des flüssig-pastösen Kunststoffmaterials angepasst ausgeformt. Eine polierte Oberfläche reduziert ebenfalls zu hohe Sprünge der Scherkräfte im der Grenzschichtströmung des flüssig-pastösen Kunststoffmaterials.

Anhand eines Ausführungsbeispieles einer Vorrichtung soll letztere und auch das erfindungsgemäße Verfahren näher verdeutlicht werden. Es zeigen
- Fig. 1: das Schnittbild einer trägerlose PVC-Schaumfolie mit einer zweifarbigen Oberseite
- Fig. 2: eine Prinzipskizze einer Streichanlage für eine PVC-Schaumfolie mit einer dreifarbigen Oberseite
- Fig. 3: eine Prinzipskizze eines Seitenschnittes einer Streichanlage für eine PVC-Schaumfolie mit einer mehrfarbigen Oberseite
- Fig. 4: eine perspektivische Ansicht eines Streichtisches für eine PVC-Schaumfolie mit einer zweifarbigen Oberseite
- Fig. 5: einen einzelnen Trennspachtel im ausgebauten Zustand

Die Fig . 1 zeigt das Schnittbild einer trägerlosen PVC-Schaumfolie 1 mit einer zweifarbigen Oberseite, welche aus den beiden Kunststoffstreifen 2 und 3 besteht, unter denen sich eine Schicht aus Schaumkunststoff 4 befindet.

Die beiden Kunststoffstreifen 2 und 3 in unterschiedlicher Farbe werden auch als "Deckstriche" bezeichnet, die Schaumfolie, 4 auch als "Schaumstrich". Die Kunststoffstreifen 2 und 3 sind mit einer Lackschicht 5 versehen, die vielerlei Zwecke erfüllen kann, beispielsweise Schutz vor mechanischen Schädigungen, Verhindern von Versprödung durch UV-Einstrahlung, etc. Auf der Unterseite der Schaumstrichs ist ein Rückenhaftlack 6 aufgebracht, der die spätere Verbindung mit einem räumlichen Körper, z. B einer Türverkleidung eines Kraftfahrzeuges, erleichtert.

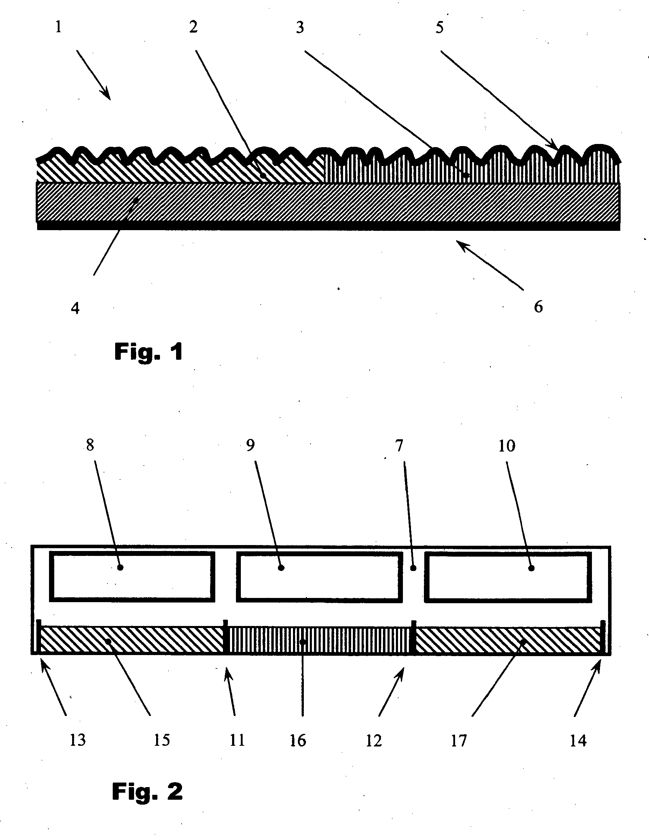

Fig. 2 zeigt in Form einer Prinzipskizze einen Streichkastens für eine PVC-Schaumfolie mit einer dreifarbigen Oberseite, über die Länge geschnitten und in Ablaufrichtung betrachtet, also quasi durch die hintere Wand gesehen. Man erkennt das auf der Vorderseite den Streichkasten abschließenden Streichrakel 7, sowie die Vorlagekästen 8 bis 10, die zur temporären Aufbewahrung des jeweilig andersfarbigen flüssig-pastösen Kunststoffmaterials und zum Nachfüllen der durch die Trennspachtel 11 und 12 sowie die Seitenspachtel 13 und 14 begrenzten Streichkastenbereiche 15 bis 17 dienen.

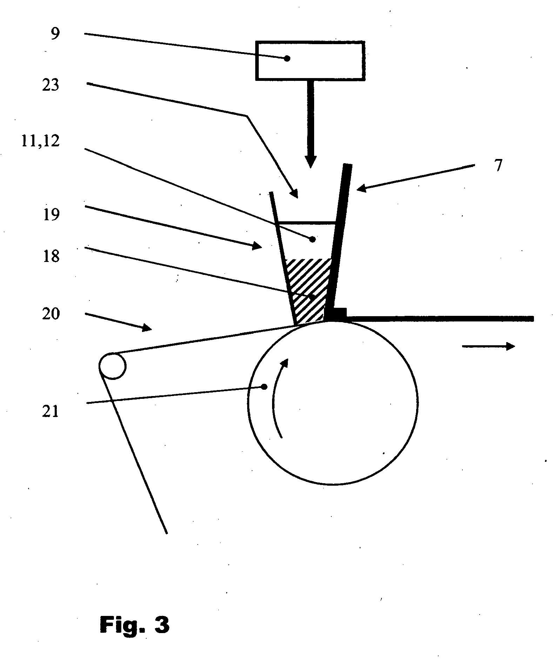

Fig. 3 zeigt eine Prinzipskizze in Form eines Seitenschnittes einer Streichanlage für eine PVC-Schaumfolie mit einer mehrfarbigen Oberseite; die Streichanlage ist ähnlich aufgebaut wie die in der Fig. 2. Das flüssig-pastöse Kunststoffmaterial 18 befindet sich in einem durch Trennspachtel 11, 12 abgetrenntem Streichkastenbereich 16. Neben den Trennspachteln begrenzen den Streichkastenbereich 16 auf der Ablaufseite der Streichrakel 7 und auf der Rückseite die Rückwand 19. Ein dehäsiv beschichtetes Trägerpapier 20 läuft zwischen der Rückwand 19 und der Streichwalze 21 sowie anliegend an letztere in den Streichkasten 23 ein und wird mit dem flüssig-pastösen Kunststoffmaterial 18 beschichtet, wobei die Schichtdicke insbesondere durch den Abstand des Streichrakels 7 vom Trägerpapier 20 und damit von der Streichwalze 21 festgelegt ist.

Nachdem als erste Lage das flüssig-pastöse Kunststoffmaterial auf das Trägerpapier aufgebracht ist, wird in einer weiteren hier nicht näher dargestellten Beschichtungsanlage eine weitere Lage aus einem Kunststoffschaum aufgebracht, danach das Trägerpapier von der Folie abgezogen, die mehrfarbige Seite mit der gewünschten Narbprägung versehen, und mit entsprechenden Lacken oder Klebern endbehandelt. Die so entstandene trägerlose Schaumfolie ist dann zur Weiterverarbeitung bereit, also beispielsweise für das unter Unterdruck erfolgende Tiefzeihen auf einen Armaturenbrett-Träger.

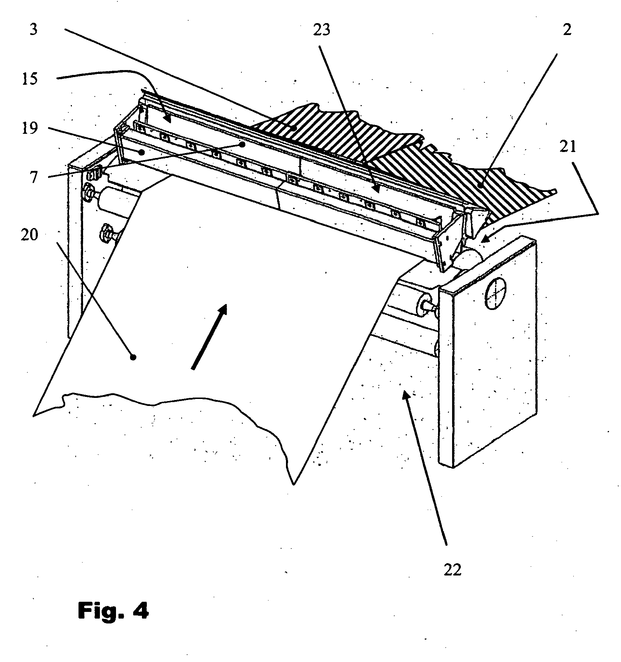

Die Fig. 4 zeigt noch einmal eine perspektivische Ansicht eines Streichtisches 22 für eine PVC-Schaumfolie mit einer zweifarbigen Oberseite. Deutlich erkennt man hier das einlaufende Trägerpapier 20, welches nach dem Durchlauf durch den Streichtisch 22, d.h. dem Durchlauf zwischen Streichwalze 21 und Streichkasten 23 mit dem Deckstrich versehen ist, nämlich mit den beiden unterschiedlich farbigen Kunststoffschichten 2 und 3.

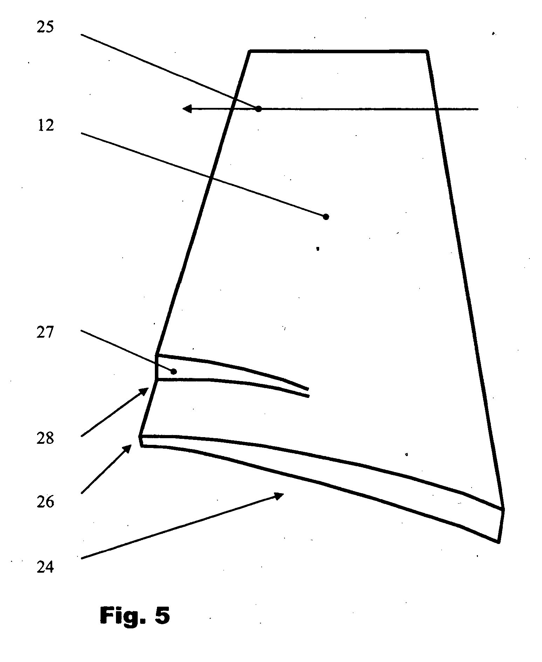

Fig. 5 zeigt vergrößert einen einzelnen Trennspachtel 12 im ausgebauten Zustand. Die Unterseite 24 des Trennspachtels 12 ist an die Rundung der Streichwalzenoberfläche angepasst.

Der Trennspachtel 12 ist zudem in seinem unteren Teil, nämlich in dem Bereich nahe der Oberfläche der Streichwalze, keilförmig mit einer in Bezug auf die Fertigungsrichtung 25 ablaufseitigen Schmalseite 26 ausgebildet.

Ebenso ist der ablaufseitig hintere und der Oberfläche des Streichrakels oder Streichmessers benachbarte Teil des Trennspachtels in seinem unteren Bereich 27 keilförmig mit einer zur Oberfläche der Streichwalze weisenden Schmalseite 28 ausgebildet.

### Bezugszeichenliste

### (Teil der Beschreibung)

- 1: PVC-Schaumfolie
- 2, 3: Kunststoffstreifen
- 4: Schaumfolie
- 5: Lackschicht
- 6: Rückenhaftlack
- 7: Streichrakel
- 8 - 10: Vorlagekasten
- 11, 12: Trennspachtel
- 13, 14: Seitenspachtel
- 1 - 17: Streichkastenbereich
- 18: Kunststoffmaterial
- 19: Rückwand
- 20: Trägerpapier
- 21: Streichwalze
- 22: Streichtisch
- 23: Streichkasten
- 24: Unterseite des Trennspachtels
- 25: Fertigungsrichtung
- 26: ablaufseitige Schmalseite des Trennspachtels
- 27: unterer Bereich des Trennspachtels
- 28: zur Streichwalze weisende Schmalseite des Trennspachtels

## Patentansprüche

1. Verfahren zur Herstellung mehrfarbiger Folien im Umkehrstreichverfahren, wobei zunächst eine Trägerstruktur mit einem flüssig-pastösen Kunststoff beschichtet und danach auf diese erste Kunststoffschicht eine zweite Kunststoffschicht aufgetragen wird, vorzugsweise in Form einer Schaumfolie, und ggf. weitere Lack- oder Kleberschichen auf die zweite Kunststoffschicht aufgebracht werden, wobei nach ausreichender Trocknung des Schichtverbundes die Trägerstruktur abgezogen und die darunter liegende Oberfläche des Schichtverbundes lackiert und mit einer Oberflächenstruktur versehen, vorzugsweise geprägt und danach ggf. geschnitten wird, **dadurch gekennzeichnet, dass** die erste Kunststoffschicht der Trägerstruktur in mehreren gleichzeitig nebeneinander aufgetragenen flüssigen Kunststoff-Chargen unterschiedlicher Farbgebung aufgebracht wird und die unterschiedlichen Kunststoff-Chargen bis kurz vor dem Anhaften auf der Trägerstruktur getrennt geführt und in ihrem Massenstrom gesteuert werden.

2. Verfahren nach Anspruch 1, **dadurch gekennzeichnet, dass** die Trägerstruktur über Walze und Rakel bzw. Streichmesser mit einem flüssigen Kunststoff beschichtet wird und dass der Massenstrom über den Kanalquerschnitt einer Zufuhreinrichtung gesteuert wird.

3. Verfahren nach Anspruch 1 oder 2, **dadurch gekennzeichnet, dass** ein dehäsiv beschichtetes Papier als Trägerstruktur eingesetzt wird.

4. Verfahren nach Anspruch 1 bis 3, **dadurch gekennzeichnet, dass** die erste Kunststoffschicht vor der Prägung der Oberflächenstruktur über eine Heizanlage erwärmt wird, wobei die Erwärmung bzw. die Heizanlage abhängig von der Absorptionsfähigkeit der nebeneinander liegenden einzelnen Farbschichten gesteuert wird.

5. Verfahren nach Anspruch 4, **dadurch gekennzeichnet, dass** die Erwärmung mindestens teilweise über Infrarot-Strahler erfolgt, wobei die Steuerung der Erwärmung über eine Segmentierung bzw. die Anordnung der Infrarot-Strahler erfolgt.

6. Verfahren nach Anspruch 1 bis 5, **dadurch gekennzeichnet, dass** das Schneiden der Folie über Sensoren gesteuert wird, welche mindestens eine der Farbtrennlinien erfassen.

7. Verfahren nach Anspruch 1 bis 6, **dadurch gekennzeichnet, dass** als Material für die erste und die zweite Kunststoffschicht ein mit einem Weichmacher versetztes Polyvinylchlorid eingesetzt wird.

8. Verfahren nach Anspruch 1 bis 6, **dadurch gekennzeichnet, dass** als Material für die erste und die zweite Kunststoffschicht ein Polyurethan eingesetzt wird.

9. Verfahren nach Anspruch 1 bis 8 zur Herstellung von Kunstleder oder Schaumkunstleder, **dadurch gekennzeichnet, dass** auf die zweite Kunststoffschicht weitere Kunststoff-, Lack- oder Kleberschichen aufgebracht werden, die mindestens teilweise mit Festigkeitsträgern, vorzugsweise mit textilen Strukturen verstärkt werden.

10. Vorrichtung zur Herstellung mehrfarbiger Folien im Umkehrstreichverfahren nach Anspruch 1 bis 9, wobei die Vorrichtung mindestens eine Streichwalze aufweist, über die die Trägerstruktur geführt wird, wobei die Vorrichtung oberhalb der Streichwalze einen zu letzterer geöffneten und über die Breite der Streichwalze ein oder mehrfach geteilten Streich- oder Vorgabekasten für die Zufuhr des flüssigen Kunststoffmateriales aufweist, wobei die Öffnung des Streichkastens an die Rundung der Walzenoberfläche angepasst ist, und wobei die ablaufseitige Wand des Streichkastens als bis in den Zenitbereich der Walze herab geführtes Streichrakel oder Streichmesser ausgebildet ist, **dadurch gekennzeichnet, dass** zur Steuerung des Massenstroms mindestens der Spalt zwischen Trägerstruktur und Streichmesser einstellbar ist und die Teilung des über die Breite der Streichwalze ein oder mehrfach geteilten Streich- oder Vorgabekastens mit Hilfe einsetzbarer Trennspachtel erfolgt, welche an ihrer Unterseite an die Rundung der Walzenoberfläche angepasst und mindestens in ihrem unteren und der Oberfläche der Streichwalze benachbarten Teil keilförmig mit einer in Bezug auf die Fertigungsrichtung ablaufseitigen Schmalseite ausgebildet sind.

11. Vorrichtung nach Anspruch 10, **dadurch gekennzeichnet, dass** die einsetzbaren Trennspachtel im Wesentlichen über die Breite der Streichwalze verstellbar sind.

12. Vorrichtung nach Anspruch 10 bis 11, **dadurch gekennzeichnet, dass** die Trennspachtel mindestens in ihrem ablaufseitig hinteren und der Oberfläche des Streichrakels oder Streichmessers benachbarten Teil keilförmig mit einer zur Oberfläche der Streichwalze benachbarten Schmalseite ausgebildet sind

13. Vorrichtung nach Anspruch 10 bis 12, **dadurch gekennzeichnet, dass** die Trennspachtel mindestens an ihrer in Bezug auf die Fertigungsrichtung ablaufseitigen Kante mindestens teilweise mit Dichtungen oder dichtenden Profilen versehen sind.

14. Vorrichtung nach Anspruch 10 bis 13, **dadurch gekennzeichnet, dass** mindestens die Seitenflächen und die Unterseite des Spachtels dehäsive Oberflächen aufweisen.

15. Vorrichtung nach Anspruch 10 bis 14, **dadurch gekennzeichnet, dass** die Spachtel in an den Wänden des Streichkastens angeordneten Halterungen gelagert sind, insbesondere angeordnet an der rückwärtigen Wand des Streichkastens, wobei die Halterungen in ihrer Oberflächenstruktur und Geometrie so ausgebildet sind, dass in den angrenzenden Strömungsschichten des flüssig-pastösen Kunststoffmaterials keine sprunghafte Änderung des Strömungswiderstandes entsteht.

## Claims

1. Method for producing multicoloured films by the reverse coating process, a supporting structure first being coated with a liquid-pasty plastic and then a second layer of plastic, preferably in the form of a sheet of foam, being applied to this first layer of plastic, and possibly further layers of lacquer or adhesive being applied to the second layer of plastic, the supporting structure being pulled off after the laminate has dried sufficiently and the surface lying thereunder of the laminate being coated and provided with a surface structure, preferably embossed, and then possibly cut, **characterized in that** the first layer of plastic of the supporting structure is applied in a number of charges of liquid plastic of different colours applied simultaneously next to one another and the different charges of plastic are guided separately and controlled in their mass flow until just before adhesion to the supporting structure.

2. Method according to Claim 1, **characterized in that** the supporting structure is coated with a liquid plastic by way of a roller and a doctor blade or cutting knife and **in that** the mass flow is controlled by way of the channel cross section of a feeding device.

3. Method according to Claim 1 or 2, **characterized in that** a dehesively coated paper is used as the supporting structure.

4. Method according to Claims 1 to 3, **characterized in that** the first layer of plastic is heated by means of a heating system before the embossing of the surface structure, the heating or the heating system being controlled in dependence on the absorbency of the individual layers of colour lying next to one another.

5. Method according to Claim 4, **characterized in that** the heating takes place at least partially by way of infrared radiators, the control of the heating taking place by way of a segmentation or the arrangement of the infrared radiators.

6. Method according to Claims 1 to 5, **characterized in that** the cutting of the film is controlled by way of sensors, which sense at least one of the colour separating lines.

7. Method according to Claims 1 to 6, **characterized in that** a polyvinylchloride mixed with a plasticizer is used for the first and second layers of plastic.

8. Method according to Claims 1 to 6, **characterized in that** a polyurethane is used as the material for the first and second layers of plastic.

9. Method according to Claims 1 to 8 for producing imitation leather or synthetic foam leather, **characterized in that** further layers of plastic, lacquer or adhesive that are at least partially reinforced with strengthening elements, preferably with textile structures, are applied to the second layer of plastic.

10. Apparatus for producing multicoloured films by the reverse coating process according to Claims 1 to 9, the apparatus having at least one coating roller, over which the supporting structure is passed, the apparatus having above the coating roller a coating or presetting box for the feeding of the liquid plastics material that is open in relation to the coating roller and divided one or more times over the width of the coating roller, the opening of the coating box being adapted to the rounding of the roller surface, and the wall of the coating box on the outlet side being formed as a coating doctor blade or coating knife that is led down into the region of the zenith of the roller, **characterized in that**, for controlling the mass flow, at least the gap between the supporting structure and the coating knife can be set and the division of the coating or presetting box that is divided one or more times over the width of the coating roller takes place with the aid of insertable separating blades, which are adapted on their underside to the rounding of the surface of the roller and are formed at least in their lower part, adjacent to the surface of the coating roller, in the form of a wedge with a narrow side on the outlet side with respect to the direction of production.

11. Apparatus according to Claim 10, **characterized in that** the insertable separating blades are adjustable substantially over the width of the coating roller.

12. Apparatus according to Claim 10 or 11, **characterized in that** the separating blades are formed at least in their part that is at the rear on the outlet side and is adjacent to the surface of the coating doctor blade or coating knife in the form of a wedge with a narrow side adjacent to the surface of the coating roller.

13. Apparatus according to Claims 10 to 12, **characterized in that**, at least on their edge on the outlet side with respect to the direction of production, the separating blades are at least partially provided with seals or sealing profiles.

14. Apparatus according to Claims 10 to 13, **characterized in that** at least the side faces and the underside of the blade have dehesive surfaces.

15. Apparatus according to Claims 10 to 14, **characterized in that** the blades are mounted in holders arranged on the walls of the coating box, in particular arranged on the rear wall of the coating box, the holders being formed in their surface structure and geometry such that no abrupt change in the flow resistance is produced in the adjacent layers of the flow of the liquid-pasty plastics material.

## Revendications

1. Procédé de production de films multicolores par le procédé d'enduction réversible, dans lequel on revêt d'abord une structure de support avec une matière plastique liquide-pâteuse, puis on dépose sur cette première couche de matière plastique une deuxième couche de matière plastique, dé préférence sous la forme d'un film expansé, et on dépose éventuellement d'autres couches de laque ou de colle sur la deuxième couche de matière plastique, dans lequel, après un séchage suffisant du composite stratifié, on retire la structure de support et on laque la surface inférieure du composite stratifié et on lui confère une structure superficielle, de préférence par gaufrage, et ensuite éventuellement on le découpe, **caractérisé en ce que** l'on dépose la première couche de matière plastique de la structure de support en plusieurs charges de matière plastique liquides de couleurs différentes déposées simultanément l'une à côté de l'autre et on guide séparément les différentes charges de matière plastique jusqu'à faible distance avant leur accrochage sur la structure de support et on commande leur courant massique.

2. Procédé selon la revendication 1, **caractérisé en ce que** l'on revêt la structure de support avec une matière plastique liquide à l'aide d'un rouleau et d'une racle ou d'une lame d'enduction et **en ce que** l'on commande le courant massique par la section transversale du canal d'un dispositif d'alimentation.

3. Procédé selon la revendication 1 ou 2, **caractérisé en ce que** l'on utilise comme structure de support un papier à revêtement antiadhésif.

4. Procédé selon l'une quelconque des revendications 1 à 3, **caractérisé en ce que** l'on chauffe la première couche de matière plastique avant le gaufrage de la structure superficielle au moyen d'une installation de chauffage, dans lequel on commande le chauffage ou l'installation de chauffage en fonction du pouvoir absorbant des couches de couleur individuelles placées l'une à côté de l'autre.

5. Procédé selon la revendication 4, **caractérisé en ce que** l'on effectue le chauffage au moins partiellement à l'aide de radiateurs à infrarouge, dans lequel on réalise la commande du chauffage par une segmentation ou l'agencement des radiateurs à infrarouge.

6. Procédé selon l'une quelconque des revendications 1 à 5, **caractérisé en ce que** l'on commande la découpe du film au moyen de capteurs, qui détectent au moins une des lignes de séparation des couleurs.

7. Procédé selon l'une quelconque des revendications 1 à 6, **caractérisé en ce que** l'on utilise comme matière pour la première et la deuxième couches de matière plastique un chlorure de polyvinyle mélangé à un plastifiant.

8. Procédé selon l'une quelconque des revendications 1 à 6, **caractérisé en ce que** l'on utilise un polyuréthane comme matière pour la première et la deuxième couches de matière plastique.

9. Procédé selon l'une quelconque des revendications 1 à 8 pour la production de similicuir ou de similicuir expansé, **caractérisé en ce que** l'on dépose sur la deuxième couche de matière plastique d'autres couches de matière plastique, de laque ou de colle, qui sont renforcées au moins partiellement avec des éléments résistants, de préférence avec des structures textiles.

10. Dispositif pour la production de films multicolores par le procédé d'enduction réversible selon l'une quelconque des revendications 1 à 9, dans lequel le dispositif comporte au moins un rouleau d'enduction, sur lequel la structure de support est guidée, dans lequel le dispositif présente au-dessus du rouleau d'enduction une caisse d'enduction ou de dosage ouverte vers celui-ci et à division unique ou multiple sur la largeur du rouleau d'enduction pour l'apport de la matière plastique liquide, dans lequel l'ouverture de la caisse d'enduction est adaptée à l'arrondi de la surface du rouleau, et dans lequel la paroi côté sortie de la caisse d'enduction est réalisée sous la forme d'une racle d'enduction ou d'une lame d'enduction guidée jusque dans la région du zénith du rouleau, **caractérisé en ce qu'**au moins la fente entre la structure de support et la lame d'enduction est réglable pour la commande du courant massique et la division de la caisse d'enduction ou de dosage à division unique ou multiple sur la largeur du rouleau d'enduction est réalisée à l'aide de palettes de séparation insérables, qui sont adaptées sur leur côté inférieur à l'arrondi de la surface du rouleau et sont réalisées, au moins dans leur partie inférieure et proche de la surface du rouleau d'enduction, en forme de coin avec un côté étroit côté sortie par rapport à la direction de fabrication.

11. Dispositif selon la revendication 10, **caractérisé en ce que** les palettes de séparation insérables sont réglables essentiellement sur la largeur du rouleau d'enduction.

12. Dispositif selon une revendication 10 à 11, **caractérisé en ce que** les palettes de séparation sont réalisées en forme de coin, avec un côté étroit proche de la surface du rouleau d'enduction, au moins dans leur partie arrière côté sortie et proche de la surface de la racle d'enduction ou de la lame d'enduction.

13. Dispositif selon l'une quelconque des revendications 10 à 12, **caractérisé en ce que** les palettes de séparation sont dotées au moins partiellement d'un profil étanche ou avec des joints d'étanchéité au moins sur leur arête côté sortie par rapport à la direction de fabrication.

14. Dispositif selon l'une quelconque des revendications 10 à 13, **caractérisé en ce qu'**au moins les faces latérales et le côté inférieur de la palette présentent des surfaces antiadhésives.

15. Dispositif selon l'une quelconque des revendications 10 à 14, **caractérisé en ce que** les palettes sont montées dans des supports disposés sur les parois de la caisse d'enduction, en particulier disposés sur la paroi arrière de la caisse d'enduction, dans lequel les supports sont réalisés, en ce qui concerne leur structure de surface et leur géométrie, de telle manière qu'il n'apparaisse aucune variation brusque de la résistance à l'écoulement dans les couches d'écoulement adjacentes de la matière plastique liquide-pâteuse.
